# EUROPÄISCHE PATENTANMELDUNG

(11) **EP 1 632 677 A2**
(43) Veröffentlichungstag der Anmeldung: **08.03.2006**
(21) Anmeldenummer: 05018549.5
(22) Anmeldetag: 26.08.2005
(51) Int. Cl.: F03D 11/00

(54) **Lageranordnung einer Windenergieanlage**

(30) Priorität: 01.09.2004 DE 102004042235
(71) Anmelder: AB SKF, S-415 50 Göteborg (SE)
(72) Erfinder: Goebel, Werner, 97490 Poppenhausen (DE); Wagner, Reiner, 97525 Schwebheim (DE)
(74) Vertreter: Kohl, Thomas

(57) **Zusammenfassung**

Eine Lageranordnung einer Windenergieanlage zum Lagern einer Welle der Windenergieanlage umfasst folgende Merkmale:
- Ein Wälzlager zum Lagern der Welle und
- Mittel zum Lagern des Wälzlagers, die im Wesentlichen an den beiden Durchtrittsstellen einer im Wesentlichen durch einen Durchmesser des Wälzlagers verlaufenden ersten Achse, außen am Wälzlager angreifend angeordnet sind und mit denen das Wälzlager wenigstens um die erste Achse schwenkbar ist.

## Beschreibung

Die Erfindung betrifft eine Lageranordnung einer Windenergieanlage zum Lagern einer Welle der Windenergieanlage.

Beispielsweise aus der DE 203 14 660 U1 ist eine Windkraftanlage bekannt, bei der ein Rotor der Windkraftanlage mittels einem zweireihigen Kegelrollenlager in O-Anordnung gelagert ist.

Weiterhin ist aus der DE 101 02 255 A1 eine Windenergieanlage mit einem an einer Spitze eines Turms befestigten Maschinenträger bekannt, der einerseits einen statischen Generatorteil hält und andererseits einen drehenden Generatorteil sowie eine rotorblättertragende Rotomabe lagert. Dabei sind die Rotornabe und das drehende Generatorteil an einer gemeinsamen Hohlwelle befestigt, welche über ein einziges auch Momente aufnehmendes Wälzlager auf einer Achshülse sitzt, die am Maschinenträger angebracht ist. Dabei ist das Wälzlager vorzugsweise ein zweireihiges Schrägrollenlager in X-Anordnung und weist Druckwinkel von etwa 45° auf.

Eine Aufgabe der Erfindung ist es, eine Lageranordnung einer Windenergieanlage zu schaffen, mit der eine lange Gebrauchsdauer der Lagerung erzielbar ist.

Die Aufgabe wird durch den Gegenstand des Anspruchs 1 gelöst. Vorteilhafte Ausgestaltungen sind in den Unteransprüchen beschrieben.

Gemäß Anspruch 1 umfasst eine Lageranordnung einer Windenergieanlage zum Lagern einer Welle der Windenergieanlage folgende Merkmale:
- Ein Wälzlager zum Lagern der Welle und
- Mittel zum Lagern des Wälzlagers, die im Wesentlichen an den beiden Durchtrittsstellen einer im Wesentlichen durch einen Durchmesser des Wälzlagers verlaufenden ersten Achse, außen am Wälzlager angreifend angeordnet sind und mit denen das Wälzlager wenigstens um die erste Achse schwenkbar ist.

Die Erfindung beruht dabei auf folgender Erkenntnis: Windenergieanlagen unterliegen naturgemäß stark wechselnden Belastungen durch den im allgemeinen ungleichmäßigen und teilweise böig wehenden Wind, wobei die Belastungen oftmals noch dadurch verstärkt werden, dass dadurch Eigenschwingungen der Windenergieanlage mit angeregt werden. Dabei wird ein die Rotorwelle lagerndes Hauptlager der Windenergieanlage binnen vergleichsweise kurzen Zeitintervallen mit vergleichsweise großen Lastwechseln in verschiedensten Richtungen beaufschlagt. Dies führt einerseits bei den bisher eingesetzten, spielbehafteten Hauptlagern, beispielsweise beinhaltend ein Pendelrollenlager, in Verbindung mit einer Dreipunktabstützung der Rotorwelle bzw. des Triebstrangs, wobei einen Stützpunkt von besagtem Lager und die beiden weiteren von einer Getriebeeinheit der Windenergieanlage gebildet werden, zu erhöhten Gleitanteilen im Lager und durch die nicht stetige Steifigkeit des spielbehafteten Lagers insbesondere in Axialrichtung zu einer zusätzlichen Belastung. Und andererseits bedingt dies bei Einsatz eines spielfreien Hauptlagers in Verbindung mit einer Dreipunktabstützung ein bisher nicht befriedigend gelöstes Ausgleichen auftretender Ausrichtungsfehler und Verformungen der Rotorwelle, was wiederum das Lager zusätzlich belastet. Durch den Gegenstand der vorliegenden Erfindung wird insbesondere vorgenanntes Ausgleichen in einer einfachen und wirkungsvollen Weise gelöst. Dabei werden auf das Lager wirkenden Ausrichtungsfehler und Verformungen der Rotorwelle ohne Spiel, das heißt insbesondere frei von einer linearen Bewegungsmöglichkeit einzelner Bauelemente gegeneinander in Verbindung mit der Möglichkeit eines abrupten Abbremsens der Linearbewegung, dadurch kompensiert, dass einzelne Bauelemente spielfrei und unempfindlich gegen ein Verklemmen gegeneinander verschwenkbar und/oder wenigstens einzelne Bauelemente bestimmungsgemäß elastisch verformbar sind. Somit ist in Summe eine lange Gebrauchsdauer der Lageranordnung erzielbar.

Weitere Vorteile, Merkmale und Einzelheiten der Erfindung ergeben sich aus den nachfolgend beschriebenen Ausführungsbeispielen der Erfindung anhand der Figuren. Dabei zeigen:
- Figur 1: eine perspektivische Ansicht eines Hauptlagers für eine Rotorwelle einer Windenergieanlage mit einem Wälzlager,
- Figur 2: eine ausschnittsweise Draufsicht auf ein mit einem Zapfen versehenes Gehäuse des Wälzlagers aus Figur 1,
- Figur 3: eine Draufsicht auf eine Buchse für den Zapfen aus Figur 2 und
- Figur 4: ausschnittsweise in perspektivischer Ansicht eine Lageranordnung einer Windkraftanlage mit einem Wälzlager, das über ein Gelenklager gelagert ist.

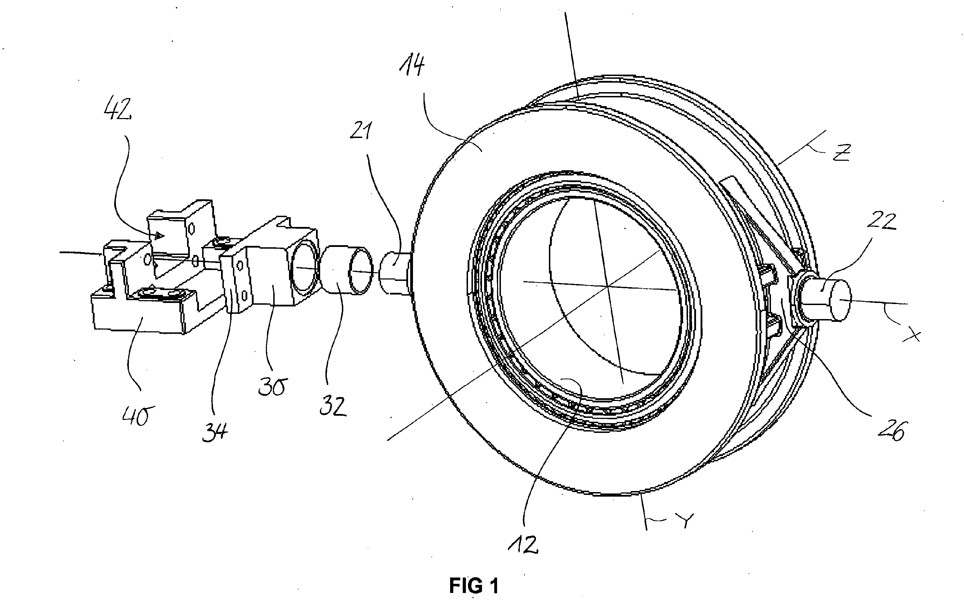

Figur 1 zeigt als ein Ausführungsbeispiel der Erfindung eine perspektivische Ansicht eines Hauptlagers für eine Rotorwelle einer Windenergieanlage mit einem Wälzlager 12 und mit Mitteln zum Lagern des Wälzlagers 12. Dabei ist das Wälzlager 12 als ein spielfrei eingestelltes zweireihiges Kegelrollenlager ausgebildet, bei dem zwischen einem Innenring und einem Außenring des Wälzlagers 12 die Kegelrollen angeordnet sind. Der Innenring nimmt dabei die aus Gründen der Übersichtlichkeit nicht dargestellte Rotorwelle auf, die sich axial entlang einer Achse Z erstreckt.

An den beiden Durchtrittsstellen einer im Wesentlichen durch einen Durchmesser des Wälzlagers 12 verlaufenden, im Wesentlichen horizontalen Achse X sind außen an einem das Wälzlager 12 im Wesentlichen umschließenden Gehäuse 14 zwei sich axial in Richtung der Achse X erstreckende Zapfen 21 und 22 mit dem Gehäuse 14 fest verbunden. Die Zapfen 21 und 22 sind dabei in Richtung einer Achse Y, die ebenfalls im Wesentlichen durch einen Durchmesser des Wälzlagers 12 verläuft und zu den Achsen X und Z im Wesentlichen senkrecht steht, hinsichtlich einem Verbiegen mit einer höheren Steifigkeit mit dem Gehäuse 14 verbunden als in Richtung der Achse Z. Dies wird unter anderem dadurch bewerkstelligt, dass der Zapfen 22 über einen sich im Wesentlichen in Richtung der Achse Y erstreckenden Steg 26 mit dem Gehäuse 14 verbunden ist. Für den Zapfen 21 und den Steg 25 gilt entsprechendes.

In der Figur 1 sind die weiteren Bauelemente für ein Lagern des Gehäuses 14 in der übrigen Windenergieanlage, insbesondere in einem Turmhaus der Anlage, der Übersichtlichkeit halber lediglich auf der linken Seite explosionszeichnungsartig dargestellt und werden im folgenden lediglich für den Zapfen 21 erläutert, wobei der Zapfen 22 entsprechend gelagert und das für den Zapfen 21 Beschriebene in entsprechender Weise gilt.

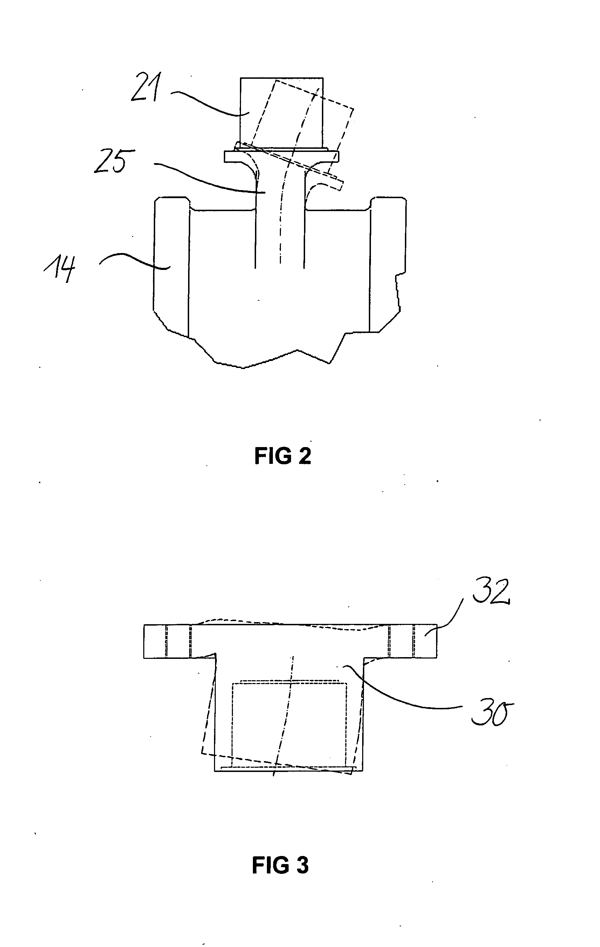

Für ein Verschwenken des Gehäuses 14 um die Achse X ist der Zapfen 21 in einer als Gleitlager ausgebildeten Buchse 30 gelagert. Dabei weist die Buchse 30 einen Einsatz 32 aus einem Faserverbundmaterial auf. Die Buchse 30 weist weiterhin an ihrer außenliegenden Stirnseite ein Rückenteil 34 auf, mit dem die Buchse 30 an einem dazu passend ausgebildeten Befestigungsblock 40 der übrigen Windenergieanlage befestigbar ist, beispielsweise durch eine Verschrauben. Das Rückenteil 34 ist dabei im Wesentlichen beiderseits einer durch die Achsen X und Y aufgespannte Ebene mit der übrigen Windenergieanlage verbunden, so dass insbesondere ein Verformen der Buchse 30 entlang der Achse X aufgrund elastischer Verformungen ermöglicht ist, was anhand der Figuren 2 und 3 noch näher erläutert ist. Für den gleichen Zweck weist dazu der Befestigungsblock 40 im Bereich um besagte Ebene herum eine entsprechende Aussparung 42 auf.

Zum Erläutern der Verschwenkbarkeit des Gehäuses 14 um die Achse Y und/oder für eine Verlagerungsmöglichkeit des Gehäuses 14 in Richtung der Achse Z aufgrund elastischer Verformungsvorgänge zeigt die Figur 3 eine Draufsicht auf die Buchse 30 und die Figur 2 eine Draufsicht auf den am Gehäuse 14 befestigten Zapfen 21, wobei in den Figuren 2 und 3 jeweils ein unverformter Zustand mit durchgezogenen Linien und mit gestrichelten Linien ein verformter Zustand dargestellt sind. Dabei ist aufgrund der bereits vorausgehend beschriebenen Befestigung des Zapfens 21 am Gehäuse 14 die Anbindung des Zapfens 21 an das Gehäuse 14 in Schubrichtung der Rotorwelle, also in Richtung der Achse Z vergleichsweise weich gestaltet, wohingegen in Richtung der Achse Y eine vergleichsweise steife Anbindung erzielt ist. Zum Ausgleichen von von der Rotorwelle ausgehenden Belastungen kann sich der Zapfen 21 wie in Figur 2 mit gestrichelten Linie dargestellt schiefstellen. Diese sich ergebende Schiefstellung des Zapfens 21 wird durch die Buchse 30 entsprechend ausgeglichen. Um die in der Figur 3 mit gestrichelten Linien dargestellte Schiefstellung der Buchse 30 zu ermöglichen, ist diese wie vorausgehend beschrieben ausgestaltet und mit dem entsprechend ausgestalteten Befestigungsblock 40 verbunden. Dadurch ist bei einer entsprechenden Auslegung eine weitgehende Entlastung des Wälzlagers 12 von Belastungen erreichbar, die insbesondere stoßartig, ausgehend von der Rotorwelle, in Richtung der Achse Z und/oder drehmomentartig um die Achse Y auf das Wälzlager 12 wirken; wenigstens ist aber eine dadurch hervorgerufene Zusatzbelastung des Wälzlagers 12 auf akzeptable Werte gemindert.

Das Faserverbundmaterial des Einsatzes 32 der Buchse 30 ist unter anderem derart gewählt, dass es in der Lage ist, verbleibende Ausrichtungsfehler der Rotorwelle elastisch auszugleichen sowie schwingungsdämpfend zu wirken. Das Material selbst ist nichtmetallisch, so dass auch eine Isolation der kompletten Lagerung gegeben ist, um vor Stromdurchgang zu schützen.

Sollte eine Auslegung ergeben, dass die vorausgehend beschriebenen Maßnahmen im Einzelfall noch keine ausreichende Elastizität ergeben, können insbesondere zwischen der Buchse 30, insbesondere deren Rückenteil 34, und der übrigen Windenergieanlage, insbesondere dem Befestigungsblock 40, Puffermittel angeordnet sein. Dabei können die Puffermittel in einer Ausführungsform aus sich abwechselnden Schichten eines harten und eines gummiartigen Materials bestehen, wobei dann das gummiartige Material am harten anvulkanisiert sein kann.

In einer anderen Ausführungsform sind am Gehäuse 14 Zapfen befestigt, die gegenüber den Zapfen 21 und 22 der Figuren 1 bis 3 an ihren axialen dem Wälzlager 12 abgewandten Enden verdickt ausgebildet sind. Dabei ist über einen derartigen Zapfen ein becherartiges Element mit einem Innendurchmesser entsprechend der Verdickung und einer axialen Ausdehnung ähnlich dem Zapfen über den Zapfen aufgeschoben, wobei dann das becherartige Element beispielsweise entsprechend in der Buchse 30 gelagert ist. Gegenüber der Verbiegung der Figuren 2 und 3 des Zapfens 21 ergibt sich dabei, vergleichbar dem sogenannten Flex-Pin-Prinzip, für den Zapfen samt becherartigem Element anstelle der einfach gebogenen Biegelinie der Figuren 2 und 3 eine doppelt gebogene S-artige Biegelinie.

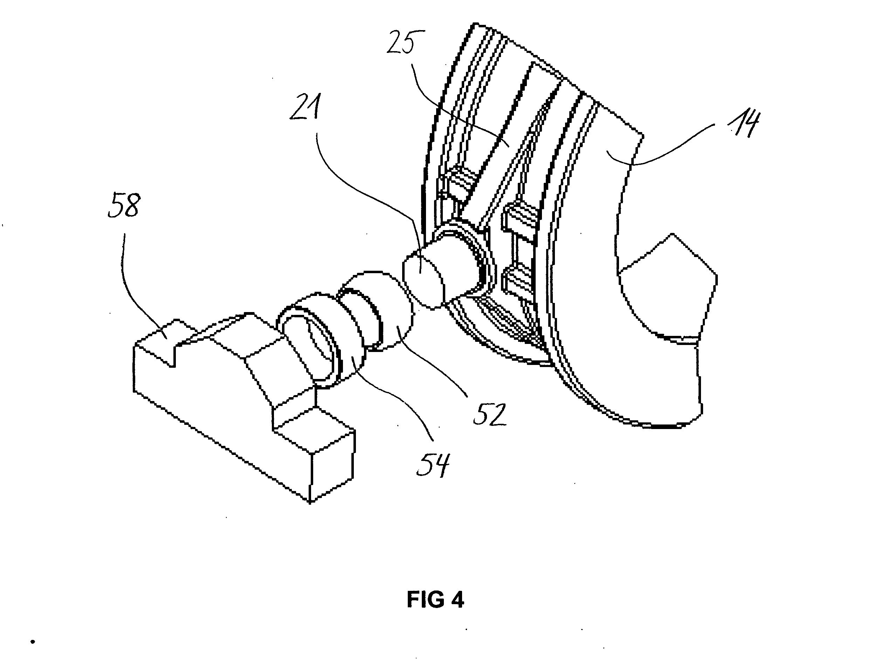

Die Figur 4 zeigt als ein weiteres Ausführungsbeispiel der Erfindung ausschnittsweise und explosionszeichnungsartig in perspektivischer Ansicht ein Hauptlager einer Rotorwelle einer Windenergieanlage mit Gelenklagern. Bei der Figur 4 gilt hinsichtlich des Wälzlagers 12, Gehäuses 14, Zapfens 21 und Stegs 25 das zu der Figur 1 Beschriebene entsprechend, so dass für vorgenannte Elemente in der Figur 4 auch die gleichen Bezugszeichen wie in der Figur 1 verwendet sind.

Anders als in der Figur 1 ist aber der Zapfen 21 in der Figur 4 über ein als ein Gleitlager ausgebildetes Gelenklager mit der übrigen Windenergieanlage verbunden. Das Gelenklager umfasst dabei zwei gegeneinander bewegbare, zueinander passende Lagerteile 52 und 54 mit einander zugewandten kugelschichtmantelartigen Oberflächenbereichen. Dabei ist eines der Lagerteile 52 oder 54 mit dem Zapfen 21 und das andere über einen entsprechend ausgebildeten Lagerblock 58 mit der übrigen Windenergieanlage verbunden. Die Anordnung entsprechend der Figur 4 vermag dabei zwar jegliche von der übrigen Windenergieanlage herrührenden Verformungen ausgleichend aufzunehmen, ist aber anders als die Anordnung gemäß der Figuren 1 bis 3 nur in geringerem Maße dazu ausgebildet, von der Rotorwelle ausgehende, in Richtung der Achse Z und/oder drehmomentartig um die Achse Y auf das Wälzlager 12 wirkende Belastungen zu kompensieren. Gegenüber einer Lösung, bei der das Gehäuse 14 vollumfänglich gelenklagermäßig gelagert ist, ist die Anordnung gemäß der Figur 4 aber aufgrund der sehr viel kleineren Durchmesser der Gelenklager wesentlich unempfindlicher gegen eine beispielsweise durch ein Verformen der übrigen Windenergieanlage hervorgerufenes Verklemmen oder Schwergänglichmachen der Gelenklager, als vorgenannte Lösung mit einem sehr großen Gelenklagerdurchmesser.

### Bezugszeichenliste

- 12: Wälzlager
- 14: Gehäuse

- 21, 22: Zapfen
- 25,26: Steg

- 30: Buchse
- 32: Einsatz
- 34: Rückenteil

- 40: Befestigungsblock
- 42: Aussparung

- 52, 54: Lagerteil
- 58: Lagerblock

- X, Y, Z: Achse

## Patentansprüche

1. Lageranordnung einer Windenergieanlage zum Lagern einer Welle der Windenergieanlage, mit folgenden Merkmalen:
- Ein Wälzlager zum Lagern der Welle und
- Mittel zum Lagern des Wälzlagers, die im Wesentlichen an den beiden Durchtrittsstellen einer im Wesentlichen durch einen Durchmesser des Wälzlagers verlaufenden ersten Achse, außen am Wälzlager angreifend angeordnet sind und mit denen das Wälzlager wenigstens um die erste Achse schwenkbar ist.

2. Lageranordnung nach Anspruch 1, wobei die Mittel für ein Schwenken des Wälzlagers um eine zweite, im Wesentlichen durch einen Durchmesser des Wälzlagers verlaufende, zur ersten im Wesentlichen senkrechten Achse und/oder für eine Lageveränderung des Wälzlagers in Richtung der Welle elastisch verformbar ausgebildet sind.

3. Lageranordnung nach einem der Ansprüche 1 oder 2, wobei die erste Achse im Wesentlichen horizontal verlaufend ist.

4. Lageranordnung nach einem der Ansprüche 1 bis 3, wobei die Mittel an den Durchtrittsstellen jeweils einen sich in Richtung der ersten Achse erstreckenden, mit dem Wälzlager verbundenen Zapfen umfassen.

5. Lageranordnung nach Anspruch 4, wobei der Zapfen in Richtung der zweiten Achse mit einer höheren Steifigkeit mit dem Wälzlager verbunden ist als in Richtung der Welle.

6. Lageranordnung nach Anspruch 5, wobei für die höhere Steifigkeit der Zapfen über einen sich im Wesentlichen in Richtung der zweiten Achse erstreckenden Steg mit dem Wälzlager verbunden ist.

7. Lageranordnung nach einem der Ansprüche 1 bis 6, wobei das Wälzlager ein Gehäuse umfasst, das einen Außenring des Wälzlagers im Wesentlichen umschließend angeordnet ist und an dem die Mittel angreifend angeordnet sind.

8. Lageranordnung nach einem der Ansprüche 5 bis 7, wobei der Zapfen an seinem axialen, dem Wälzlager abgewandten Ende verdickt ausgebildet ist und ein becherartiges Element mit einem Innendurchmesser entsprechend der Verdickung und einer axialen Ausdehnung ähnlich dem Zapfen über den Zapfen aufgeschoben ist.

9. Lageranordnung nach einem der Ansprüche 4 bis 8, wobei der Zapfen oder das becherartige Element für das Schwenken um die erste Achse in einer Buchse gelagert ist.

10. Lageranordnung nach Anspruch 9, wobei die Buchse einen Einsatz aus einem Faserverbundmaterial umfasst.

11. Lageranordnung nach einem der Ansprüche 9 oder 10, wobei die Buchse an ihrer außenliegenden Stirnseite ein Rückenteil umfasst, mit dem die Buchse an der übrigen Windenergieanlage verbindbar ist.

12. Lageranordnung nach Anspruch 11, wobei das Rückenteil im Wesentlichen in einem Bereich um eine durch die erste und zweite Achse aufgespannte Ebene frei von einer Verbindungsmöglichkeit mit der übrigen Windenergieanlage ausgebildet ist.

13. Lageranordnung nach einem der Ansprüche 9 bis 12, wobei zwischen der Buchse, insbesondere deren Rückenteil, und der übrigen Windenergieanlage Puffermittel, insbesondere umfassend ein gummiartiges Material, angeordnet sind.

14. Lageranordnung nach einem der Ansprüche 1 bis 13, wobei die Mittel ein Gelenklager umfassen.

15. Lageranordnung nach Anspruch 14, wobei das Gelenklager zwei gegeneinander bewegbare, zueinander passende, im Wesentlichen ringartige Lagerteile mit einander zugewandten kugelschichtmantelartigen Oberflächenbereichen umfasst.

16. Lageranordnung nach Anspruch 15, wobei die Lagerteile zwischen dem Wälzlager, insbesondere dem Zapfen, und der übrigen Windenergieanlage angeordnet sind.

17. Lageranordnung nach einem der Ansprüche 9 bis 16, wobei die Buchse und/oder das Gelenklager als ein Gleitlager ausgebildet sind.

18. Lageranordnung nach einem der Ansprüche 1 bis 17, wobei das Wälzlager spielfrei einstellbar ausgebildet ist.

19. Lageranordnung nach einem der Ansprüche 1 bis 18, wobei das Wälzlager ein Kegelrollenlager ist.

20. Lageranordnung nach einem der Ansprüche 1 bis 19, wobei das Wälzlager als ein zweireihiges Wälzlager ausgebildet ist.

21. Lageranordnung nach Anspruch 20, wobei das Wälzlager in X- oder in O-Anordnung ausgebildet ist.

22. Lageranordnung nach einem der Ansprüche 1 bis 21, wobei die Lageranordnung ein Hauptlager einer Rotorwelle der Windenergieanlage umfasst.
